# EUROPÄISCHE PATENTSCHRIFT

(11) **EP 0 718 319 B1**
(45) Veröffentlichungstag und Bekanntmachung des Hinweises auf die Patenterteilung: **17.02.1999**
(21) Anmeldenummer: 95119540.3
(22) Anmeldetag: 12.12.1995
(51) Int. Cl.: C08F 20/12

(54) **Verfahren zur Herstellung von Beschichtungen**
Process for preparing coatings
Procédé de préparation de revêtements

(30) Priorität: 23.12.1994 DE 4446364
(43) Veröffentlichungstag der Anmeldung: 26.06.1996
(73) Patentinhaber: Röhm GmbH, 64293 Darmstadt (DE)
(72) Erfinder: Dieter, Heinz, D-69251 Gaiberg (DE); Parusel, Markus, D-64409 Messel (DE); Siol, Werner, Dr., D-64297 Darmstadt (DE)

(56) Entgegenhaltungen:
- EP-A- 0 030 440
- DE-A- 4 327 464

## Beschreibung

### Gebiet der Erfindung

Die Erfindung betrifft ein Verfahren zur Herstellung von Beschichtungen aus verschmelzbaren, monodispersen Poly(meth)acrylat-Teilchen mit Teilchendurchmessern von 2 - 20 µm.

### Stand der Technik

Die Praxis verzeichnet einen starken Bedarf an Kunststoffen in Form von Kunststoffteilchen mit einer definierten, einheitlichen Teilchengröße im Bereich zwischen 2 und 20 µm.
Die klassische Methode zur Herstellung definierter Kunststoffteilchen, die Emulsionspolymerisation, versagt in diesem Teilchengrößenbereich (vgl. Ullmann's Encyclopedia of Industrial Chemistry, 5th. Ed. Vol. A21, pages 168, 373-387, Verlag Chemie, Weinheim, New York, 1992; Becker-Braun, Kunststoff-Handbuch, Band 1, Seiten 26 - 28, Carl Hauser, München, 1990). Auf dem Wege der Emulsionspolymerisation lassen sich in der Regel nur Teilchen mit einem Durchmesser von ≤ 2 µm problemlos herstellen. Die Bemühungen, größere Teilchen herzustellen, führen bei der Emulsionspolymerisation im allgemeinen zu Teilchenneubildungen, also zu multimodalen Teilchengrößenverteilungen. Gemäß Literaturangaben soll es gelingen, durch mehrfaches Anquellenlassen von wäßrigen Dispersionen mit Monomeren und deren anschließende Polymerisation Teilchen im genannten Größenbereich durch Emulsionspolymerisation herzustellen [vgl. J. Ugelstad et.al., Adv. Colloid Interface Sci. 13, 191 (1980)]. Das dort angegebene Verfahren ist jedoch äußerst kompliziert. Auch mit der klassischen Suspensionspolymerisation, bei der bekanntlich die Teilchendurchmesser primär durch die Rührgeschwindigkeit gesteuert werdenb, sind im allgemeinen keine Teilchendurchmesser im Bereich zwischen 5 und 15 µm möglich. Darüber hinaus sind solche Teilchen nicht monodispers, sondern fallen in breiter Teilchengrößenverteilung an.
Wesentlich günstiger sind die Möglichkeiten, monodisperse Poly(meth)acrylat-Teilchen mit einem Durchmesser von 2 - 20 µm zu gewinnen, wenn man die Teilchen nach dem Prinzip der Fällungspolymerisation im organischen Medium unter Einsatz eines organischen Verteilers herstellt. Dementsprechend groß ist die Zahl von Veröffentlichungen zu diesem Thema. Die Fällungspolymerisation von Polymethylmethacrylat (PMMA) in Kohlenwasserstoffen wurde bereits vor 60 Jahren vorgeschlagen (US-A 2,135,443, DRP 662,157). Über einhundert Schutzrechte und zahlreiche sonstige Literaturstellen haben sich seither mit der Polymerisation von Alkyl(meth)acrylaten in nicht-wäßrigen Dispersionen beschäftigt. In vielen der einschlägigen Schutzrechte werden reine Lackanwendungen beschrieben: stabile, sehr feinteilige Dispersionen. Darüber hinaus gibt es auch Arbeiten, die den Einfluß der Emulgatoren, der Initiatoren und der Lösungsmittelgüte auf die Teilchengröße untersuchen.
Eine sehr informative Zusammenfassung der Dispersionspolymerisation von Methylmethacrylat in nicht-wäßrigen Medien wird von M.a. Winnik et.al. [Makromol. Chem. Macromol. Symp. 10/11, 483-501 (1987)] geboten. Als Emulgatoren für die Dispersionspolymerisation werden vor allem Blockcopolymere eingesetzt. Einen Überblick über die gängigen Polymerisationsbedingungen gibt ebenfalls M.A. Winnik et al. (loc.cit., Table 1, Seite 485). Wie aus dieser Arbeit ferner hervorgeht, läßt sich die Teilchengröße über die Konzentration des Emulgators (Fig. 1), die Initiatorkonzentration (Fig. 5), sowie über den Feststoffgehalt (Fig. 3) und die Lösungsmittelgüte (Fig.4) steuern. Die dortigen Abbildungen lassen erkennen, daß eine Steuerung zu Teilchen mit Durchmessern > 3 µm vor allem mit Tetrachlorkohlenstoff/Alkan-Mischungen möglich ist. Ohne Zusatz von Halogenkohlenwasserstoffen findet man dagegen Bereiche, in denen eine Teilchengrößensteuerung überhaupt nicht möglich ist - man erhält hier Koagulation.
Die Verwendung halogenierter Kohlenwasserstoffe im gewerblichen Bereich ist aus ökologischen und toxikologischen Gründen heutzutage nur eingeschränkt möglich. Die europäische Patentanmeldung EP-A-0639590 löst dieses Problem, indem sie ein Verfahren zur Herstellung monodisperser Poly(meth)acrylatteilchen nach dem Verfahren der Fällungspolymerisation bereitstellt, bei dem Monomere M, enthaltend zu mindestens 60 Gew.-% Alkyl(meth)acrylate mit 1 bis 8 Kohlenstoffatomen im Esterrest, Aryl(meth)acrylate oder Aralkyl(meth)acrylate, in einem halogenfreien Lösungsmittel L, bestehend aus mindestens 70 Gew.-% und bis zu 100 Gew.-% aus Cyclohexan, in Gegenwart eines Blockcopolymeren mit Polystyrolanteilen BCP in Anteilen von 0,1 bis 10 Gew.-% bezogen auf die Monomeren und in Anwesenheit eines Perkohlensäuresters als Initiator in Anteilen von 0,02 bis 2 Gew.-% bezogen auf die Monomeren polymerisiert werden.
Nach diesem Verfahren lassen sich sehr gut Teilchen mit einem Brechungsindex im Bereich 1,48 - 1,58 und mit Teilchengrößen zwischen 4 und 12 µm herstellen. Solche Teilchen sind vorzugsweise vernetzt und werden zur Oberflächenveredelung von Formkörpern oder zur Einarbeitung in Formmassen zur Erzielung optischer Effekte verwendet.

### Aufgabe und Lösung

Auf dem Gebiet der Oberflächenbeschichtung besteht weiterhin das Bedürfnis nach Dispersionen, die aus Teilchen mit einer monodispersen Teilchengröße bestehen und die auch nach Entfernung des Lösungsmittels ausgezeichnete Filmbildeeigenschaften aufweisen. In diesem Zusammenhang sei darauf hingewiesen, daß bei der normalen Filmbildung mit wäßrigen Dispersionsteilchen, die Kapillarkräfte in den Zwickeln die Teilchen deformieren und so einen geschlossenen Film erzeugen.
Dabei existiert für jede Kunststoffdispersion eine bestimmte Mindestfilmbildetemperatur MFT (zur MFT siehe DIN 53787). Ganz allgemein gilt, daß die MFT unterhalb der Kühlgrenztemperatur liegen muß. Die hier beschriebenen Kunststoffteilchen lassen sich demgegenüber auch nach Entfernen des Lösungsmittels noch gut verschmelzen.
Voraussetzung für gute Filmbildung ist, daß sich die Dispersionsteilchen auf der zu beschichtenden Oberfläche möglichst gleichmäßig anordnen und daß beim Entfernen des Lösungsmittels und/oder beim Erwärmen die Grenzflächen der Teilchen verschwinden. Das gilt insbesondere für trockene Oberflächenbeschichtungen, wie beispielsweise Pulverlacke, bei welchen die Polymerisatteilchen isoliert vorliegen.
Überraschenderweise weisen monodisperse Poly(meth)acrylatteilchen, die nach dem in EP-A-0639590 beschriebenen Verfahren hergestellt werden, dadurch gekennzeichnet, daß man die Monomeren M, enthaltend zu mindestens 60 Gew.-% Monomere der Formel I: 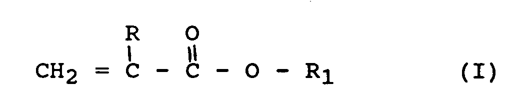 worin
- R: für Wasserstoff oder Methyl und
- R₁: für einen Alkylrest mit 1 bis 8 Kohlenstoffatomen, einen gegebenenfalls substituierten Arylrest oder einen Aralkylrest
stehen,
in einem halogenfreien Lösungsmittel L als kontinuierliche Phase in Gegenwart eines Blockcopolymerisats BCP als Emulgator und eines Radikalinitiators IN polymerisiert, sehr gute Eigenschaften auf, wenn die Poly(meth)acrylate, enthaltend zu mindestens 60 Gew.-% die Monomereinheiten M, Vicat-Erweichungstemperaturen VET nach ISO 306 zwischen 30 und 110 Grad C sowie spezifische Viskositäten in Chloroform nach DIN 51562 zwischen 10 und 150 cm³/g aufweisen. Dabei besteht das Lösungsmittel L bevorzugt zu mindestens 70 und bis 100 Gew.-% aus Cyclohexan oder zu mindestens 55 und bis zu 100 Gew.-% aus einer Verbindung der Formeln II oder III: 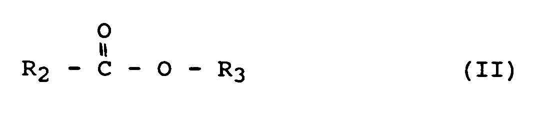 oder

R₄ - OH III

worin
- R₂: für einen geradkettigen oder verzweigten Alkylrest mit 5 bis 23 Kohlenstoffatomen,
- R₃: für Wasserstoff oder einen geradkettigen oder verzweigten Alkylrest mit 1 bis 15 Kohlenstoffatomen, und
- R₄: für einen geradkettigen oder verzweigten, gesättigten Alkylrest mit 10 - 22 Kohlenstoffatomen
stehen,
oder zu 70 bis 100 Gew.-% aus Mineralölen, wobei die Mineralöle vorzugsweise aus der Gruppe der Gasöle mit einem Siedebereich von 225 - 350 Grad C (vgl. DIN 51567) ausgewählt sind. Genannt seien die Handelsprodukte Shell Risella Öl G07 oder sofern die Teilchen z.B. in lebensmittelnahe Beschichtungen gehen, wird man aromatenfreie Mineralöle wählen, wie z.B. EXXOL D 100S.
Vorzugsweise sind die Emulgatoren Blockcopolymerisate mit Polystyrolanteilen BCP, die, bezogen auf die Monomeren M, in Anteilen von 0,1 bis 10 Gew.-% eingesetzt werden. Die Blockcopolymerisate BCP sind vorzugsweise aufgebaut aus einem Polystyrol- und einem gegebenenfalls hydrierten Polyisopren-Block oder aus einem Polystyrol- und einem gegebenenfalls hydrierten Polybutadien-Block.
Bevorzugte Radikalinitiatoren IN, die, bezogen auf die Monomeren M, in Mengen von 0,01 bis 2 Gew.-% eingesetzt werden, sind Percarbonsäureester.
In einer weiteren bevorzugten Ausführungsform der Erfindung bestehen die Monomeren M zu 20 bis 100 Gew.-% aus Methylmethacrylat, bezogen auf M.

Vorzugsweise weisen die erfindungsgemäß verwendeten monodispersen Poly(meth)acrylatteilchen mittlere Durchmesser im Bereich zwischen 3 und 12 µm auf. Unter dem Begriff **monodispers** sei zu verstehen, daß die Teilchen zu mindestens 80 Gew.-%, vorzugsweise zu mindestens 90 Gew.-% innerhalb eines Größenbereichs von ± 20 % vom angegebenen mittleren Teilchendurchmesser liegen.
Gelegentlich können auch geringere Anteile (weniger als 5 Gew.-%) feiner Teilchen gebildet werden, die jedoch anwendungstechnisch völlig ohne Belang sind.
Die erfindungsgemäßen Oberflächenbeschichtungen werden vorzugsweise durch Auftragen der Dispersionen und nachträgliches Abdampfen des Lösungsmittels L oder durch Pulverbeschichtung mit den aus der Dispersion isolierten Poly(meth)acrylat-Teilchen hergestellt. Ein besonderer Vorteil ist darin zu sehen, daß diese durch Fällungspolymerisation in einem organischen Medium hergestellten Teilchen mit einem Durchmesser von 2 - 20 µm auch ohne die Kapillarwirkung des Lösungsmittels (siehe oben) zu geschlossenen, hochwertigen Filmen verschmolzen werden können.

### Durchführung der Erfindung

### Die Komponenten für die Teilchenherstellung

Erfindungsgemäß verwendete Monomere M sind beispielsweise Methyl(meth)acrylat, Ethyl(meth)acrylat, n-Propyl(meth)acrylat, iso-Propyl(meth)acrylat, n-Butyl(meth)acrylat, iso-Butyl(meth)acrylat, tert.-Butyl(meth)acrylat, Amyl(meth)acrylat, n-Hexyl(meth)acrylat, n-Octyl(meth)acrylat oder 2-Ethylhexyl(meth)acrylat.
Vorzugsweise sind die Monomeren M zu 20 bis 100 Gew.-% Methylmethacrylat und zu bis zu 80 Gew.-% Comonomere, die die Vicat-Erweichungstemperatur VET des Copolymerisats erniedrigen, wie beispielsweise Methylacrylat, Ethyl(meth)acrylat, Butyl(meth)acrylat, Isobutyl(meth)acrylat oder 2-Ethylhexyl(meth)acrylat.
Wenn erforderlich, werden zur Erhöhung des Brechungsindex der Oberflächenbeschichtung oder zur Verbesserung der Haftung der Oberflächenbeschichtung auf dem zu beschichtenden Substrat vorzugsweise Aryl- bzw. Aralkyl(meth)acrylate mit 6 bis 14 Kohlenstoffatomen im Esterrest, insbesondere Phenyl-, Tolyl-, Naphthyl-, Benzyl- oder Penylethyl(meth)acrylate in Anteilen von 1 bis 80 Gew.-% bezogen auf M eingesetzt. Der Anteil an Vinylaromaten, wie Styrol oder seine Homologe, wird auf weniger als 20 Gew.-% bezogen auf M zu begrenzen sein, da diese Monomere den Polymerisationsverlauf erheblich stören. Durch die Mitverwendung hydrophiler Monomerer, die ebenfalls die Haftung zwischen Oberflächenbeschichtung und Substrat verbessern können, läßt sich die Teilchengröße in Richtung Teilchenverkleinerung steuern. Als derartige hydrophile Monomere kommen beispielsweise Hydroxylester der (Meth)acrylsäure oder alkylsubstituierte Aminoalkylester der (Meth)acrylsäure mit C₁- bis C₁₂-Alkylresten sowie die entsprechenden Amide infrage.
Hydrophobe Comonomere, wie beispielsweise die schon genannten Isobutylmethacrylat, Phenylmethacrylat oder Benzylmethacrylat, steuern die Teilchengröße in Richtung Teilchenvergrößerung.

Als Lösungsmittel L, entsprechend der kontinuierlichen Phase der Dispersion, wird vorzugsweise Cyclohexan in Anteilen zwischen 70 und 100 Gew.-% bezogen auf L verwendet, wobei kleinere Anteile (weniger als 30 Gew.-%) anderer Lösungsmittel, beispielsweise polarer Lösungsmittel wie Butylacetat, in L enthalten sein können.
In einer weiteren bevorzugten Ausführungsform der Erfindung werden als Lösungsmittel L, entsprechend der kontinuierlichen Phase der Dispersion, Verbindungen der Formeln II oder III 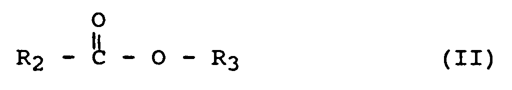 oder

R₄ - OH III

worin
- R₂: für einen geradkettigen oder verzweigten Alkylrest mit 5 bis 23 Kohlenstoffatomen,
- R₃: für Wasserstoff oder einen geradkettigen oder verzweigten Alkylrest mit 1 bis 15 Kohlenstoffatomen, und
- R₄: für einen geradkettigen oder verzweigten, gesättigten Alkylrest mit 10 bis 22 Kohlenstoffatomen
stehen,
eingesetzt. Solche Verbindungen der Formel II aus der Gruppe der Fettsäuren oder Fettsäureester sind bei Raumtemperatur Festkörper mit niedrigem Schmelzpunkt oder Öle. Neben Fettsäuren natürlichen Ursprungs bzw. deren Ester können auch synthetisch gewonnene Säuren, wie beispielsweise 2-Ethylhexansäure, zum Einsatz kommen (vgl. Kirk-Othmer, Encyclopedia of Chemical Technology, 3rd. Ed. Vol. 4, pg. 814 - 871, J. Wiley, New York, 1978).

Genannt seien insbesondere die C₈- bis C₁₄-Fettsäuren, wie beispielsweise Caprylsäure (C₈-Fettsäure), Pelargonsäure (C₉-Fettsäure), Caprinsäure (C₁₀-Fettsäure), Laurinsäure (C₁₂-Fettsäure) oder Myristinsäure (C₁₄-Fettsäure). Zur Präparation und zur Verfügbarkeit der entsprechenden Fettsäureester vgl. beispielsweise Kirk-Othmer, loc.cit., Vol. 9, Seiten 311 - 337, J. Wiley, New York, 1980.
In einer dritten bevorzugten Ausführungsform der Erfindung werden als Lösungsmittel L Mineralöle eingesezt, vorzugsweise ausgewählt aus der Gruppe Gasöle mit einem Siedebereich von 225 - 350 Grad C, wie beispielsweise das Produkt Shell Gasöl G07, die in Mengen von 70 bis 100 Gew.-% eingesetzt werden, wobei die verbleibenden Anteile am Lösungsmittel L von bis zu 30 Gew-% durch Ester, wie beispielsweise Butylacetat, substituiert werden können.

Als Emulgatoren, die bevorzugt in Anteilen von 0,1 bis 10 Gew.-% bezogen auf die Monomeren M verwendet werden, werden vorzugsweise Blockcopolymerisate mit Polystyrolanteilen BCP eingesetzt, besonders bevorzugt Blockpolymerisate BCP, aufgebaut aus einem Polystyrol- und einem gegebenenfalls hydrierten Polyisopren-Block oder aus einem Polystyrol- und einem gegebenenfalls hydrierten Polybutadien-Block. Die Blockcopolymerisate BCP enthalten im allgemeinen 20 bis 80 Gew.-% Polystyrol-Blöcke neben den aus der Hydrierung von Polyisopren bzw. Polybutadien hervorgegangenen Ethylen-so-Propylen-Blöcken bzw. Ethylen-co-Butylen-Blöcken.
Genannt seien beispielsweise die hydrierten Styrol-Isopren-Blockcopolymerisate vom Typ SHELLVIS ® der Fa. Shell. Die Blockcopolymerisate BCP besitzen im allgemeinen ein mittleres Molekulargewicht M_{w} im Bereich 3 x 10⁴ bis 2 x 10⁵, vorzugsweise zwischen 7 x 10⁴ und 1,3 x 10⁵ Dalton (zur Bestimmung von M_{w} vgl.
beispielsweise H.F. Mark et al., Encyclopedia of Polymer Science and Technology, Vol. 10, Seiten 1 bis 19, J. Wiley, New York, 1987).

Die erfindungsgemäß eingesetzten Monomeren M machen in der Regel 20 bis 60 Gew.-Teile, die als kontinuierliche Phase der Dispersion dienenden Lösungsmittel L gewöhnlich 80 bis 40 Gew.-Teile sowie die Emulgatoren, vorzugsweise die Blockcopolymerisate mit Polystyrolanteilen BCP, 0,05 bis 5 Gew.-% der Reaktionsmischung aus, wobei sich sämtliche Anteile der Reaktionsmischung, inklusive der Radikalinitiatoren IN und der Molekulargewichtsregler RM, zu 100 Gew.-Teilen ergänzen.

Als Radikalinitiatoren IN kommen an sich bekannte, für die radikalische Polymerisation verwendete Initiatoren in Mengen von 0,01 bis 2 Gew.-% bezogen auf die Monomeren M infrage (vgl. H. Rauch-Puntigam, Th. Völker, Acryl- und Methacrylverbindungen, Springer, Heidelberg, 1967).
Bevorzugte Radikalinitiatoren IN sind Percarbonsäureester, wie beispielsweise Bis-(4-tert.-Butylcyclohexyl)peroxodicarbonat, Dicyclohexylperoxodicarbonat (unter den Warenzeichen INTEROX ® BCHPC bzw. INTEROX ® CHPC der Fa. Peroxidchemie, im Handel), Diisopropylperoxodicarbonat, sowie besonders bevorzugt tert.-Butylperneodecanoat, gegebenenfalls in einem geeigneten Lösungsmittel, wie beispielsweise Butylacetat, gelöst (vgl. Brandrup-Immergut, Polymer Handbook, 3rd. Ed., Teil II-1, J. Wiley, New york, 1989).

Als geeignete Molekulargewichtsregler RM werden ebenfalls an sich übliche in Mengen von 0,05 bis 5 Gew.-%, vorzugsweise von 0,1 bis 2 Gew.-% bezogen auf die eingesetzten Monomeren verwendet (vgl. hierzu auch H. Rauch-Puntigam, Th. Völker, Acryl- und Methacrylverbindungen, Springer, Heidelberg, 1967).
Bevorzugte Molekulargewichtsregler RM sind Mercaptane R'-SH, wobei R' für eine gegebenenfalls cyclische oder verzweigte Alkylgruppe mit 2 bis 20 Kohlenstoffatomen stehen kann, wie beispielsweise n-Butylmercaptan, n-Dodecylmercaptan oder tert.-Dodecylmercaptan, oder Ester der Thioglykolsäure.

### Das Verfahren zur Herstellung monodisperser Teilchen

Bei der Durchführung des Verfahrens geht man bevorzugt von einer flüssigen, in der Regel homogenen Mischung aller Komponenten aus. Zweckmäßig wird die Mischung erwärmt und die Polymerisation durch Zugabe des Initiators IN ausgelöst.
Im einzelnen bietet sich beispielsweise folgende Vorgehensweise an: Die Polymerisation kann in einem für die Fällungspolymerisation geeigneten Reaktor bei kleineren Ansätzen, beispielsweise einem 500 ml-Vierhalskolben mit Kühler, Thermometer, Rührer und Schutzgaseinleitungsvorrichtung, durchgeführt werden. Zweckmäßig wird unter einem Schutzgas, wie beispielsweise Argon, gearbeitet. Vorteilhafterweise gibt man in dem Reaktor das Lösungsmittel L, die Monomeren M sowie den Emulgator, insbesondere die Blockcopolymerisate BCP vor. Als Anhalt seien beispielsweise 150 Gew.-Teile Lösungsmittel L bezogen auf 100 Gew.-Teile Monomere M genannt. Anschließend wird die Reaktionsmischung erwärmt - als Anhalt seien 60 bis 70 Grad c genannt. Wenn die gewählte Innentemperatur erreicht ist, startet man unter Rühren die Polymerisation durch Zugabe des Initiators, vorzugsweise gelöst im Lösungsmittel L oder gegebenenfalls in geringen Mengen eines geeigneten, von L verschiedenen Lösungsmittels, wie beispielsweise Butylacetat.
Gewöhnlich steigt die Reaktorinnentemperatur bereits nach kurzer Zeit, beispielsweise nach 1 Minute, an, wobei sich die bis dahin klare Lösung trübt. Nach etwa 5 Minuten erscheint der Ansatz in der Regel bereits weiß. Als typische Fällungspolymerisation verläuft die Polymerisation recht schnell, so daß auf eine gute Kühlung und Rührung geachtet werden muß. Sie kann bereits nach 1 Stunde nahezu vollständig abgelaufen sein. Zur Nachreaktion hält man noch über eine gewisse Zeit, beispielsweise ca. 1 Stunde, unter Rühren bei 80 Grad C und läßt unter Rühren auf Temperaturen abkühlen, bei denen insbesondere die Lösungsmittel L der Formel II noch flüssig sind. Die so erhaltene Dispersion ist nahezu völlig koagulatfrei. Man erhält monodisperse Polymerisatpartikel im angegebenen Größenbereich von 1 bis 20 µm, die beispielsweise durch Filtration abgetrennt werden können. In der Regel empfiehlt es sich, den Filterkuchen nochmals nachzuwaschen, beispielsweise mit Methanol. Eine weitere Möglichkeit zur Isolierung der monodispersen Polymerisatpartikel aus dem Lösungsmittel L besteht im Abdestillieren des Lösungsmittels L, vorzugsweise unter Vakuum, wobei darauf geachtet werden muß, daß die Lösungsmitteltemperatur die Vicat-Erweichungstemperatur VET der Polymerisatpartikel nicht übersteigt.

### Verfahren zur Herstellung von Oberflächenbeschichtungen

Die nach dem oben beschriebenen Verfahren hergestellten Polymerisate weisen Vicat-Erweichungstemperaturen VET nach ISO 306 zwischen 30 und 110 Grad C, sowie spezifische Viskositäten in Chloroform bei 25 Grad C nach DIn 51562 zwischen 10 und 150 cm³/g, vorzugsweise zwischen 20 und 100 cm³/g entsprechend mittleren Molekulargewichten M_{w} zwischen 10⁴ und 4 x 10⁵, vorzugsweise zwischen 3 x 10⁴ und 2,5 x 10⁵ Dalton auf (Korrelation von M_{w} und spezifischer Viskosität nach Mark-Houwink, Eichstandard PMMA; zur Bestimmung von M_{w} vgl. H.F. Mark, loc.cit., s.o.).
Die erfindungsgemäßen Dispersionen mit den monodispersen Polymersatteilchen weisen aufgrund der gleichmäßigen Teilchengröße hervorragende Filmbildeeigenschaften auf.
Bevorzugt erfolgt die Filmbildung auf den Oberflächen der zu beschichtenden Substrate bei Temperaturen oberhalb der Vicat-Erweichungstemperatur VET des die Teilchen aufbauenden Polymerisats, besonders bevorzugt bei Temperaturen, die mindestens 10 K, bevorzugt 20 K, über der VET liegen.
Die erfindungsgemäßen Dispersionen mit den monodispersen Polymerisatteilchen können mit verschiedenen Methoden auf die zu beschichtenden Oberflächen aufgetragen werden (vgl. hierzu Kirk-Othmer, Encyclopedia of Chemical Technology, 3rd. Ed., Vol. 6, Seiten 386 - 426, J. Wiley, New York, 1975). Vorzugsweise werden die Dispersionen beispielsweise mit Bürsten, Rakeln, Sprühdüsen, durch gegebenenfalls eingekerbte Übertragungsrollen oder durch Tauchbeschichtung auf die zu beschichtenden Oberflächen aufgebracht. Dabei kommt der Ausführung der Trockenzone, in der die Filmbildung durch die Verschmelzung der Polymerteilchen eintritt, eine hohe Bedeutung zu. Die Trocknung der Filme, d.h. das Abziehen des Lösungsmittels L, kann durch Kontakttrocknung erreicht werden, wie vorzugsweise durch Erhitzen des zu beschichtenden Substrats, beispielsweise mit erhitzter Luft oder mit Dampf oder durch indirekte Trocknung, wie vorzugsweise durch Konvektionstrockner, die die Verdampfung des Lösungsmittels L beschleunigen, oder durch Trocknung im Hochfrequenzfeld (vgl. Kirk-Othmer, loc.cit., Vol. 6, Seiten 422 - 425).
In einer besonders bevorzugten Ausführung der Erfindung werden die monodispersen Polymerisatteilchen zunächst als Pulver aus der Dispersion isoliert und mittels eines Pulverbeschichtungsverfahrens auf die zu beschichtende Oberfläche aufgetragen. Die Pulverbeschichtung erfolgt in einer bevorzugten Ausführungsform der Erfindung durch elektrostatische Beschichtung, indem die Pulverteilchen mit einer elektrostatischen Oberflächenladung versehen werden, auf die geerdete Metalloberfläche gesprüht werden und danach verschmolzen werden (vgl. hierzu Kirk-Othmer, loc.cit., Vol. 6, Seite 412). Besonders bevorzugt erfolgt die Oberflächenbeschichtung in einem zweistufigen Prozeß, bei dem in der ersten Stufe das Lösungs- oder Dispersionsmittel entfernt wird und in einer zweiten Stufe, wenn das Lösungs-/Fällungsmittel zu wenigstens 90 % entfernt ist, das Verschmelzen der Teilchen durch Energiezufuhr, z.B. durch Erwärmen in einem Trockenschrank, erfolgt.
Bei nicht-metallischen Oberflächen, wie beispielsweise Textilfasern oder textilen Geweben, kann das Pulver mechanisch, beispielsweise durch Rüttelsiebe, auf das vorzugsweise aus Gründen der Haftungsverbesserung angefeuchtete Substrat aufgetragen werden und danach durch Hitzebehandlung zu einem zusammenhängenden Film auf dem Substrat verschmolzen werden.
Die erfindungsgemäßen Polymerisatteilchen-Pulver können vorzugsweise weiterhin Bestandteile von Beschichtungen aus Plastisolen oder High-Solid-Lacken sein, wobei die Plastisole bevorzugt zur Herstellung von Beschichtungen von mindestens 50 µm Dicke verwendet werden.

### Vorteilhafte Wirkungen der Erfindung

Von besonderem Vorteil ist die breite Variationsmöglichkeit zur Steuerung der Teilchengröße, wobei man über folgende Steuerungsparameter verfügt:
a) die Polarität des Lösungsmittels L, die sich im Falle von Cyclohexan-haltigen Lösungsmitteln L bzw. im Falle von Mineralölen als Lösungmsittel L durch Zusätze von polaren Lösungsmitteln, wie beispielsweise Butylacetat, steuern läßt, bzw. die durch das Verhältnis von Kohlenwasserstoffzu Carboxylgruppe bei Lösungsmitteln L der Formel II steuerbar ist. Es gilt für vergleichbare Monomeren M: je höher die Polarität des Lösungsmittels, desto größer werden die mittleren Teilchendurchmesser.
b) Die Polarität der Monomeren:
   Je mehr sich die Polarität der Monomeren M der Polarität des Lösungsmittels L annähert, desto größer werden die mittleren Teilchendurchmesser.
c) Der Feststoffgehalt:
   Je höher der Feststoffgehalt der Polymerisationsansätze, dest größer werden die mittleren Teilchendurchmesser.
d) Weiterhin können die mittleren Teilchendurchmesser durch die Polymerisationstemperatur (je höher die Polymerisationstemperatur, desto größer die mittleren Teilchendurchmesser), durch Art und Menge des Polymerisationsinitiators IN sowie durch Art und Menge des Emulgators BCP gesteuert werden.

Weiterhin von Vorteil ist, daß mit den erfindungsgemäßen Beschichtungsverfahren aufgrund der gleichmäßigen Teilchengröße der Dispersionsteilchen und deren hervorragender Aufschmelzbarkeit schon bei dünnen Beschichtungen eine hohe Gleichmäßigkeit der Schichtdicke und ausgezeichnete Eigenschaften der Schichtoberflächen, wie weitestgehende Fehlstellenfreiheit und daraus resultierend hoher Oberflächenschutz und hoher Glanz, erzielt werden können.
Die aus der Dispersion isolierten Polymerisatteilchen können besonders vorteilhaft für lösungsmittelfreie Beschichtungen, beispielsweise als Pulverlacke oder für Verfahren mit elektrostatischem Bindemittelpulverauftrag, angewendet werden. Auch hierbei ist, durch den gleichmäßigen Teilchendurchmesser bedingt, eine deutliche Materialersparnis durch dünnere Schichten bei guter Schutzwirkung derselben möglich.

Die folgenden Beispiele dienen zur Erläuterung der Erfindung.

### BEISPIELE

### Beispiel 1

### Herstellung von Polymethacrylat-Teilchen und Beschichtung

In einem Dreihalskolben (500 ml) ausgestattet mit Kühler, Argon-Einleitung, Thermometer und Rührer werden
- 142,17 g: Mineralöl EXXSOL ® D100S
- 37,15 g: Methylmethacrylat
- 21,67 g: Butylmethacrylat
- 3,10 g: Butylacrylat
- 0,62 g: Dodecylmercaptan als Molekulargewichtsregler, sowie
- 0,77 g: Styrol-Isopren-Blockcopolymerisat SHELLVIS ® 50 (Fa. Shell)
gemischt und auf 75 Grad C erwärmt.
Wenn die Innentemperatur 75 Grad C erreicht hat, wird durch Zugabe von 0,93 g tert.-Butylperneodecanoat (75 %ig in Aliphaten gelöst) die Polymerisation ausgelöst. Bereits nach 2 Minuten steigt die Temperatur auf 77 Grad C. Die vorher klare Lösung wird deutlich trüb, nach 5 Minuten erscheint der Ansatz weiß. Nach 20 Minuten ist die Innentemperatur auf 78 Grad C gestiegen und wird auf diesem Temperaturniveau konstant gehalten. Zur Nachreaktion wird noch 1 Stunde bei 80 - 85 Grad C gerührt. Anschließend wird unter Rühren abgekühlt.

Die gebildete Dispersion ist fast völlig koagulatfrei, die erhaltenen Teilchen sind monodispers und weisen einen mittleren Teilchendurchmesser von 4 µm auf.
Aus der Dispersion wird der Feststoff durch Abfiltrieren, Sedimentation oder Dekantieren und nachfolgendes Trocknen bei Raumtemperatur im Vakuum isoliert.

Mit den auf diesem Wege erhaltenen 4 µm großen Teilchen wird eine 5 %ige Dispersion in Cyclohexan hergestellt. Mit der so hergestellten, weißen, dünnflüssigen Dispersion wird eine Glasplatte beschichtet.
Man läßt das Cyclohexan verdampfen (1 Tag bei Raumtemperatur). Man erhält eine gleichmäßige weiße Beschichtung. In diesem Zustand sind die Teilchen unter dem Mikroskop einzeln als wohl geordneter Verbund erkennbar. Durch Erwärmen im Trockenschrank (30 Minuten bei 100 Grad C) wird anschließend eine geschlossene, glasklare Beschichtung erhalten.

## Patentansprüche

1. Verfahren zur Herstellung von Oberflächenbeschichtungen aus monodispersen Poly(meth)acrylatteilchen, hergestellt durch Fällungspolymerisation in einem halogenfreien Lösungsmittel L in Gegenwart eines Blockcopolymerisats BCP,
dadurch gekennzeichnet,
daß die Poly(meth)acrylatteilchen aufgebaut sind aus Monomereinheiten M, die zu mindestens 60 Gew.-% Monomereinheiten der Formel I: 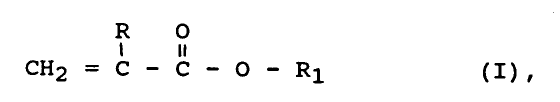 worin
R für Wasserstoff oder Methyl und
R₁ für einen Alkylrest mit 1 bis 8 Kohlenstoffatomen, einen gegebenenfalls substituierten Arylrest oder ein Aralkylrest
stehen,
daß das resultierende Poly(meth)acrylat eine Vicat-Erweichungstemperatur VET nach ISO 306 zwischen 30 und 110 Grad C aufweist, daß die spezifische Viskosität des Poly(meth)acrylats in Chloroform bei 25 Grad C nach DIN 51562 zwischen 10 und 150 cm³g⁻¹ liegt und daß der Durchmesser der Polymethacrylatteilchen im Bereich 2 - 20 µm liegt.

2. Verfahren zur Herstellung von Oberflächenbeschichtungen gemäß Anspruch 1, dadurch gekennzeichnet, daß die Dispersion aus Poly(meth)acrylatteilchen in dem Lösungsmittel L auf das zu beschichtende Substrat aufgetragen wird, das Lösungsmittel L verdampft wird ohne daß die Teilchen verkleben, sowie anschließend die zusammenhängende Oberflächenbeschichtung durch Erwärmen auf wenigstens 10 Grad K über die Vicat-Erweichungstemperatur VET der Poly(meth)acrylatteilchen gebildet wird.

3. Verfahren zur Herstellung von Oberflächenbeschichtungen gemäß Anspruch 1, dadurch gekennzeichnet, daß zunächst die Poly(meth)acrylatteilchen aus der Dispersion als Pulver isoliert werden und das Pulver danach auf das zu beschichtende Substrat aufgebracht wird und unter Erwärmen zu einer zusammenhängenden Oberflächenbeschichtung verschmolzen wird.

4. Verfahren gemäß den Ansprüchen 1 bis 3, dadurch gekennzeichnet, daß die monodispersen Poly(meth)acrylatteilchen Durchmesser im Bereich 3 bis 12 µm besitzen.

5. Verfahren gemäß den Ansprüchen 1 bis 4, dadurch gekennzeichnet, daß die Monomeren M zu mindestens 20 Gew.-% aus Methylmethacrylat bestehen.

6. Verfahren gemäß den Ansprüchen 1 bis 5, dadurch gekennnzeichnet, daß die Blockcopolymerisate BCP ausgewählt sind aus Blockcopolymeren mit Styroleinheiten enthaltend neben Polystyrolblöcken gegebenenfalls hydrierte Isopren- oder Butadien-Blöcke.

7. Verfahren gemäß den Ansprüchen 1 bis 6, dadurch gekennzeichnet, daß das halogenfreie Lösungsmittel L zu mindestens 70 und bis zu 100 Gew.-% aus Cyclohexan besteht.

8. Verfahren gemäß den Ansprüchen 1 bis 6, dadurch gekennzeichnet, daß das halogenfreie Lösungsmittel L aus einer Verbindung der Formeln II oder III besteht: 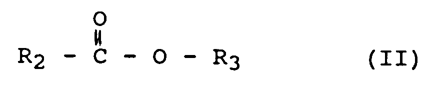 oder
R₄ - O - H III
worin
R₂ für einen geradkettigen oder verzweigten Alkylrest mit 5 bis 23 Kohlenstoffatomen
R₃ für Wasserstoff oder einen geradkettigen oder verzweigten Alkylrest mit 1 bis 15 Kohlenstoffatomen, und
R₄ für einen geradkettigen oder verzweigten gesättigten Alkylrest mit 10 bis 22 Kohlenstoffatomen
stehen.

9. Verfahren gemäß den Ansprüchen 1 bis 6, dadurch gekennzeichnet, daß das halogenfreie Lösungsmittel L aus Mineralölen, ausgewählt aus der Gruppe der Gasöle mit einem Siedebereich von 225 bis 350 Grad C nach DIN 51567, besteht.

10. Verfahren gemäß den Ansprüchen 1 bis 9, dadurch gekennzeichnet, daß die Monomeren M zu 1 bis 80 Gew.-% Aryl- oder Aralkyl(meth)acrylate mit 6 bis 14 Kohlenstoffatomen im Esterteil enthalten.

## Claims

1. A process for the preparation of surface coatings of monodispersed poly(meth)acrylate particles, produced by precipitation polymerisation in a halogen-free solvent L in the presence of a block copolymer BCP,
characterised in that
the poly(meth)acrylate particles are composed of monomer units M, which are at least 60% by weight monomer units of formula 1: 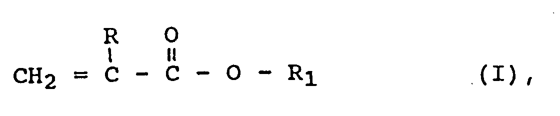 wherein
R denotes hydrogen or methyl and
R₁ denotes an alkyl group with 1 to 8 carbon atoms, an optionally-substituted aryl group or an aralkyl group,
the resultant poly(meth)acrylate has a Vicat softening temperature VET according to ISO 306 of between 30 and 110°C, the specific viscosity of the poly(meth)acrylate in chloroform is between 10 and 150 cm³g⁻¹ at 25°C according to DIN 51562 and that the diameter of the polymethacrylate particles is in the range 2 - 20 µm.

2. A process for the preparation of surface coatings according to claim 1, characterised in that a dispersion of poly(meth)acrylate particles in the solvent L is applied onto the substrate which is to be coated, the solvent L is evaporated without the particles adhering, and that additionally the connected surface coating is formed by heating to at least 10 degrees K above the Vicat softening temperature VET of the poly(meth)acrylate particles.

3. A process for the preparation of surface coatings according to claim 1, characterised in that firstly the poly(meth)acrylate particles are isolated from the dispersion as a powder and then the powder is applied to the substrate which is to be coated and is then melted into a cohesive surface coating with the application of heat.

4. A process according to claims 1 to 3, characterised in that the monodispersed poly(meth)acrylate particles have a diameter in the range 3 to 12 µm.

5. A process according to claims 1 to 4, characterised in that the monomers M comprise at least 20% by weight methyl methacrylate.

6. A process according to claims 1 to 5, characterised in that the block copolymers BCP are selected from block copolymers with styrene units which optionally contain hydrogenated isoprene or butadiene blocks in addition to the polystyrene blocks.

7. A process according to claims 1 to 6, characterised in that the halogen-free solvent L comprises at least 70 and up to 100 % by weight cyclohexane.

8. A process according to claims 1 to 6, characterised in that the halogen-free solvent L comprises a compound of formula II or III: 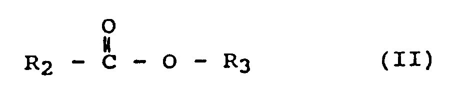
R₄ - O - H (III)
wherein
R₂ denotes a straight-chained or branched alkyl group with 5 to 23 carbon atoms
R₃ denotes hydrogen or a straight-chained alkyl group with 1 to 15 carbon atoms, and
R₄ denotes a straight-chained or branched saturated alkyl group with 10 to 22 carbon atoms.

9. A process according to claims 1 to 6, characterised in that the halogen-free solvent L comprises mineral oils selected from the group of gas oils with a boiling range from 225 to 350°C according to DIN 51567.

10. A process according to claims 1 to 9, characterised in that the monomers M contain 1 to 80% by weight aryl or aralkyl (meth)acrylate with 6 to 14 carbon atoms in the ester portion.

## Revendications

1. Procédé de fabrication de revêtements de surfaces constitués de particules de poly(méth)acrylate monodispersées, que l'on obtient par une polymérisation par précipitation dans un solvant L dépourvu d'halogène, en présence d'un copolymère séquencé BCP,
caractérisé en ce que
- les particules de poly(méth)acrylate sont constituées d'unités monomères M, et qui représentent à au moins 60 % en poids des unités monomères de formule I : 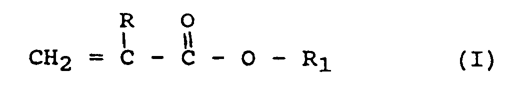
- dans laquelle :
R représente un hydrogène ou un méthyle, et
R₁ représente un radical alkyle ayant de 1 à 8 atomes de carbone, un radical aryle éventuellement substitué ou un radical aralkyle,
- le poly(méth)acrylate résultant présente une température de ramollissement de Vicat VET selon ISO 306 comprise entre 30 et 100°C,
- la viscosité spécifique du poly(méth)acrylate dans le chloroforme à 25°C selon DIN 51562 est comprise entre 10 et 150 cm³/g, et en ce que le diamètre des particules de poly(méth)acrylate est compris entre 2 et 20 micromètres.

2. Procédé de fabrication de revêtements de surface selon la revendication 1,
caractérisé en ce que
- la dispersion de particules de poly(méth)acrylate dans le solvant L est déposée sur le substrat à revêtir, en ce que l'on fait évaporer le solvant L sans que les particules ne collent, et ensuite
- le revêtement de surface cohérent est formé par chauffage à au moins 10 °K au-dessus de la température de ramollissement de Vicat VET des particules de poly(méth)acrylate.

3. Procédé de fabrication de revêtements de surface selon la revendication 1,
caractérisé en ce qu'
- on isole d'abord les particules de poly(méth)acrylate à partir de la dispersion sous forme de poudre, puis
- on dépose la poudre sur le substrat à revêtir et en ce qu'en chauffant on la fait fondre en un revêtement de surface cohérent.

4. Procédé selon les revendications 1 à 3,
caractérisé en ce que
les particules de poly(méth)acrylate monodispersées présentent un diamètre compris entre 3 et 12 micromètres.

5. Procédé selon les revendications 1 à 4,
caractérisé en ce que
les monomères M se composent à au moins 20 % en poids de méthacrylate de méthyle.

6. Procédé selon les revendications 1 à 5,
caractérisé en ce que
les copolymères séquencés BCP sont choisis parmi les copolymères séquencés avec des unités styrène, contenant outre des séquences de polystyrène, des séquences d'isoprène ou de butadiène, éventuellement hydrogénées.

7. Procédé selon les revendications 1 à 6,
caractérisé en ce que
le solvant dépourvu d'halogène L se compose à au moins 70 et jusqu'à 100 % en poids de cyclohexane.

8. Procédé selon les revendications 1 à 6,
caractérisé en ce que
le solvant dépourvu d'halogène L est constitué d'un composé de formules II ou III 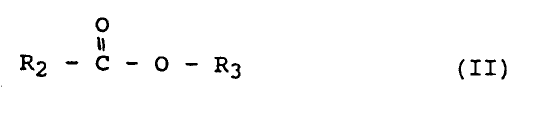 ou
R₄ - OH (III)
dans lesquelles
R₂ représente un radical alkyle à chaîne droite ou ramifiée ayant de 5 à 23 atomes de carbone,
R₃ représente un hydrogène ou un radical alkyle à chaîne droite ou ramifiée ayant de 1 à 15 atomes de carbone, et
R₄ représente un radical alkyle à chaîne droite ou ramifiée saturé ayant de 10 à 22 atomes de carbone.

9. Procédé selon les revendications 1 à 6,
caractérisé en ce que
le solvant dépourvu d'halogène L se compose d'huiles minérales, choisies dans le groupe des gazoles, ayant un intervalle d'ébullition de 225 à 350°C selon DIN 51567.

10. Procédé selon les revendications 1 à 9, caractérisé en ce que
les monomères M contiennent jusqu'à 1 à 80 % en poids de (méth)acrylate d'aryle ou d'aralkyle, avec de 6 à 14 atomes de carbone dans la partie ester.
